# EUROPÄISCHE PATENTANMELDUNG

(11) **EP 4 684 628 A1**
(43) Veröffentlichungstag der Anmeldung: **28.01.2026**
(21) Anmeldenummer: 25191234.1
(22) Anmeldetag: 23.07.2025
(51) Int. Cl.: A01D 34/90, B25F 5/02

(54) **ARBEITSGERÄT**

(30) Priorität: 24.07.2024 DE 102024121109
(71) Anmelder: Andreas Stihl AG & Co. KG, 71336 Waiblingen (DE)
(72) Erfinder: Dieterich, Michael, 71332 Waiblingen (DE); Koch, Johanna, 71672 Marbach-Rielingshausen (DE); Hein, Andrea, 71139 Ehningen (DE)
(74) Vertreter: Stock, Johannes

(57) **Zusammenfassung**

Die Erfindung betrifft ein Handgriff für ein handgeführtes Arbeitsgerät,
wobei der Handgriff (6, 7) einen Schaft (8) aufweist, der ein Befestigungsende (9) und ein freies Ende (10) aufweist und sich von dem Befestigungsende (9) bis zu dem freien Ende (10) über eine Schaftlänge (a) erstreckt, wobei der Schaft (8) des Handgriffes (6, 7) an dem Befestigungsende (9) festgelegt ist, wobei der Handgriff (6, 7) ein erstes Bedienelement (11) zur Steuerung des Arbeitsgerätes (1) aufweist, wobei das erste Bedienelement benachbart zum freien Ende (10) des Schaftes (8) angeordnet ist, wobei der Handgriff (6, 7) eine Anzeigevorrichtung (20) mit einem Anzeigeelement (21) zur Übermittlung von Betriebsinformationen an den Bediener (51) aufweist, wobei die Anzeigevorrichtung (20) derart an dem Schaft (8) angeordnet ist, dass ein Abstand (e) zwischen der Anzeigevorrichtung (20) und dem Befestigungsende (9) geringer ist als die halbe Schaftlänge (a).

## Beschreibung

Die Erfindung betrifft einen Handgriff für ein Arbeitsgerät der im Oberbegriff des Anspruchs 1 angegebenen Gattung sowie ein Arbeitsgerät der im Oberbegriff des Anspruchs 11 angegebenen Gattung.

Es sind Arbeitsgeräte mit Bikelenkern bekannt, wobei an einem Bikelenker zwei Handgriffe vorgesehen sind. An mindestens einem der beiden Handgriffe ist ein Bedienelement zur Steuerung des Arbeitsgerätes vorgesehen. Ferner ist es üblich, dass derartige Arbeitsgeräte weitere Bedienmittel an den Handgriffen zur Steuerung oder zur Anzeige zusätzlicher Funktionen des Arbeitsgerätes aufweisen. Diese können jedoch den Bediener bei der Ausführung verschiedener Arbeitsbewegungen stören.

Der Erfindung liegt daher die Aufgabe zugrunde, einen Handgriff für ein Arbeitsgerät zu schaffen, mit dem verschiedene Arbeitsbewegungen ergonomisch durchgeführt werden können und zugleich mehrere Gerätefunktionen angezeigt oder gesteuert werden können. Eine weitere Aufgabe der Erfindung liegt darin, ein Arbeitsgerät anzugeben, mit dem verschiedene Arbeitsbewegungen ergonomisch durchgeführt werden können und zugleich mehrere Gerätefunktionen angezeigt und/oder gesteuert werden können.

Diese Aufgabe wird bezüglich des Handgriffes für ein Arbeitsgerät durch einen Handgriff mit den Merkmalen des Anspruchs 1 gelöst. Bezüglich des Arbeitsgerätes wird die Aufgabe durch ein Arbeitsgerät mit den Merkmalen des Anspruchs 11 gelöst.

Der erfindungsgemäße Handgriff für ein handgeführtes Arbeitsgerät weist einen Schaft auf, der ein Befestigungsende und ein freies Ende aufweist und sich von dem Befestigungsende bis zu dem freien Ende über eine Schaftlänge erstreckt, wobei der Schaft des Handgriffes an dem Befestigungsende festgelegt ist. Der Handgriff weist ein erstes Bedienelement zur Steuerung des Arbeitsgerätes aufweist. Das erste Bedienelement ist benachbart zum freien Ende des Schaftes angeordnet. Der Handgriff weist eine Anzeigevorrichtung mit einem Anzeigeelement zur Übermittlung von Betriebsinformationen an den Bediener auf. Die Anzeigevorrichtung ist derart angeordnet, dass ein Abstand zwischen der Anzeigevorrichtung und dem Befestigungsende geringer ist als die halbe Schaftlänge (a). Die Anzeigevorrichtung ist insbesondere benachbart zum Befestigungsende des Schaftes angeordnet.

Durch die nahe Anordnung der Anzeigevorrichtung zum Befestigungsende des Schaftes, kann der Bediener den Handgriff am freien Ende sowie zwischen dem freien Ende und dem Befestigungsende greifen, ohne dass dieser versehentlich die Anzeigevorrichtung kontaktiert oder verdeckt. Zur Ausübung beispielsweise einer hin- und hergehenden Bewegung beim Mähen kann der Bediener den Handgriff zwischen dem Befestigungsende und dem freien Ende fassen. Zur Ausübung einer auf- und abgehenden, eher schlagenden Bewegung beim Häckselbetrieb kann der Bediener den Handgriff am freien Ende fassen. Ein ergonomisches Arbeiten ist somit sichergestellt. Über die benachbart zum Befestigungsende des Schaftes angeordnete Anzeigevorrichtung kann mindestens eine zusätzliche Gerätefunktion angezeigt und/oder gesteuert werden.

Das Anzeigeelement der Anzeigevorrichtung ist insbesondere ein Display. Das Anzeigeelement der Anzeigevorrichtung kann insbesondere ein berührungsempfindliches Display sein. Betriebsinformationen des Arbeitsgerätes können somit an den Bediener übermittelt werden. Dies kann beispielsweise der Füllstand der Energiequelle, der Betriebsmodus des Arbeitsgerätes oder dergleichen Zustände oder Systeminformationen des Arbeitsgerätes sein.

Es ist insbesondere vorgesehen, dass die Anzeigevorrichtung ein zusätzliches Bedienelement zur Benutzereingabe umfasst. Somit können über das zusätzliche Bedienelement auch Eingaben in das Arbeitsgerät seitens des Benutzers erfolgen. Das zusätzliche Bedienelement ist insbesondere in dem Display angeordnet. Somit ist die Anzeigevorrichtung kompakt gestaltet. In einer alternativen Ausführung des Handgriffes kann es vorgesehen sein, dass die Anzeigevorrichtung mehrere zusätzliche Bedienelemente aufweist, die insbesondere in dem Display angeordnet sind.

Ist das Display als ein berührungsempfindliches Display ausgebildet, kann dieses als Anzeigeelement und zugleich als zusätzliches Bedienelement dienen.

Es ist vorteilhaft vorgesehen, dass das Anzeigeelement an dem Schaft des Handgriffes angeordnet ist. Der Handgriff weist insbesondere eine Außenseite auf, die mindestens teilweise zur Anlage an einem Handteller eines Benutzers vorgesehen ist, wobei der Handgriff eine der Außenseite gegenüberliegende Innenseite aufweist, wobei die Anzeigevorrichtung auf der Innenseite des Handgriffes angeordnet ist.

Durch die Anordnung des Bedienelementes auf der Innenseite des Handgriffes ist es für den Bediener wesentlich einfacher, die Anzeigevorrichtung zu sehen und/oder zu betätigen.

Es ist insbesondere vorgesehen, dass der Handgriff, insbesondere der Schaft, einen ersten Halteabschnitt umfasst, wobei der erste Halteabschnitt zwischen dem Befestigungsende und dem freien Ende des Handgriffes ausgebildet ist. Greift der Bediener den Handgriff an seinem ersten Halteabschnitt zwischen dem freien Ende und dem Befestigungsende, kann der Bediener Hin- und Herbewegungen beim Mähen ergonomisch ausführen.

Der Handgriff umfasst insbesondere einen zweiten Halteabschnitt, wobei der zweite Halteabschnitt an dem freien Ende des Handgriffes, insbesondere des Schaftes, als Auflagefläche zur Auflage einer Hand des Bedieners ausgebildet ist. Legt der Bediener seine Hand auf den zweiten Halteabschnitt des Handgriffes auf, kann dieser Auf- und Abbewegungen des Arbeitsgerätes besonders ergonomisch ausführen.

Es ist insbesondere vorgesehen, dass die Anzeigevorrichtung außerhalb des ersten Halteabschnittes und außerhalb des zweiten Halteabschnittes angeordnet ist. So kann ein versehentliches Verdecken oder Kontaktieren der Anzeigevorrichtung durch die Hand des Bedieners vermieden werden. Die Anzeigevorrichtung ist insbesondere zwischen dem ersten Halteabschnitt und dem Befestigungsende angeordnet.

Ein Ausführungsbeispiel der Erfindung wird im Folgenden anhand der Zeichnung erläutert. Es zeigen:
- Fig. 1: eine schematische, perspektivische Darstellung eines Bedieners mit einem Arbeitsgerät und
- Fig. 2: eine perspektivische Darstellung eines Handgriffes des Arbeitsgerätes aus Fig. 1.

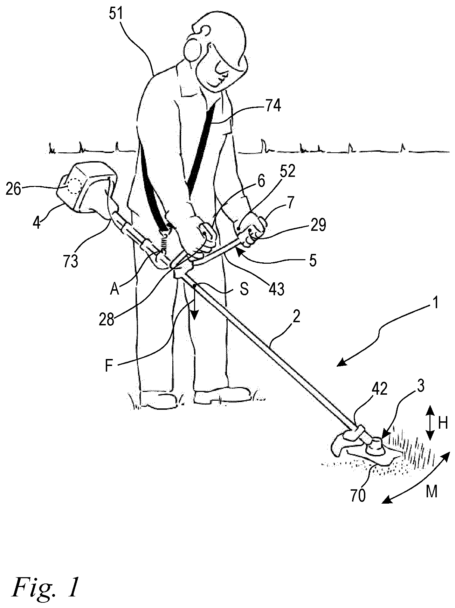

In Fig. 1 ist ein Arbeitsgerät 1 gezeigt. Das Arbeitsgerät 1 ist im Ausführungsbeispiel ein handgeführtes Arbeitsgerät, insbesondere ein tragbares, handgeführtes Arbeitsgerät oder ein rückengetragenes, handgeführtes Arbeitsgerät. Der Begriff "tragbar" bedeutet, dass das Arbeitsgerät 1 derart ausgebildet ist, dass dieses im bestimmungsgemäßen Betrieb zu tragen ist. Der Begriff "rückengetragen" bedeutet, dass das Arbeitsgerät 1 derart ausgebildet ist, dass dieses im bestimmungsgemäßen Betrieb im Wesentlichen über den Rücken des Bedieners 51 getragen wird. Hierfür umfasst das Arbeitsgerät 1 eine Rückentragvorrichtung. Das Arbeitsgerät 1 ist im Ausführungsbeispiel ein Freischneider. Das Arbeitsgerät 1 kann auch als Motorsense, als Blasgerät, als Sprühgerät, als Hochentaster oder dergleichen Arbeitsgerät ausgebildet sein.

Fig. 1 zeigt schematisch einen Benutzer 51, der das Arbeitsgerät 1 trägt. Das Arbeitsgerät 1 weist insbesondere ein Führungsrohr 2 auf. An einem Ende 42 des Führungsrohrs 2 ist eine Werkzeugeinheit 3, im Ausführungsbeispiel ein Werkzeugkopf mit einem als Schneidmesser 70 ausgebildeten Werkzeug, angeordnet. Am anderen Ende 73 des Führungsrohrs 2 ist ein Gehäuse 4 angeordnet.

Im Ausführungsbeispiel ist im Gehäuse 4 ein schematisch dargestellter Antriebsmotor 26 angeordnet. Der Antriebsmotor 26 kann beispielsweise ein Elektromotor, insbesondere ein von einem Akku mit Energie versorgter Elektromotor, oder ein Verbrennungsmotor sein. Der Bediener 51 trägt das Arbeitsgerät 1 mit einem Traggurt 74. Über den Traggurt 74 wird das Gewicht des Arbeitsgerätes 1 im Betrieb zumindest teilweise, insbesondere weitgehend aufgenommen. Der Traggurt 74 hält das Arbeitsgerät 1 an einem Aufhängepunkt A. Das Arbeitsgerät 1 ist an dem Traggurt 74 vorteilhaft so aufgehängt, dass das Arbeitsgerät 1 an dem Traggurt 74 in einer Arbeitslage, also einer Lage, in der die Werkzeugeinheit 3 weiter unten angeordnet ist als das Gehäuse 4, frei hängt.

In Fig. 1 sind schematisch der Schwerpunkt S des Arbeitsgerätes 1 und die Gewichtskraft F eingezeichnet. Der Schwerpunkt S des Arbeitsgerätes 1 ist gegenüber dem Aufhängepunkt A vorteilhaft in Richtung auf die Werkzeugeinheit 3 verschoben. Dadurch hängt das Arbeitsgerät 1 an dem Traggurt 74 so, dass die Werkzeugeinheit 3 weiter unten angeordnet ist als das Gehäuse 4 des Arbeitsgerätes 1.

Zum Führen des Arbeitsgerätes 1 ist am Führungsrohr 2 ein Lenkergriff 5 fixiert. Über den Lenkergriff 5 werden im Betrieb des Arbeitsgerätes 1 insbesondere die Kräfte zum Vorschub des Werkzeugs 70 eingeleitet. Die Vorschubbewegung kann beispielsweise eine hin- und hergehende Bewegung beim Mähen oder eine auf- und abgehende, schlagende Bewegung beim Häckselbetrieb sein. Die Bewegungsrichtung beim Mähen ist in Fig. 1 schematisch mit dem Doppelpfeil M eingezeichnet und die Bewegungsrichtung beim Häckselbetrieb mit dem Doppelpfeil H.

Der Lenkergriff 5 ist ein sogenannter Bikelenker. Der Lenkergriff 5 umfasst einen Lenkerholm 43. Der Lenkerholm 43 erstreckt sich vorzugsweise etwa quer zum Führungsrohr 2. An den beiden Enden des Lenkerholms 43 ist jeweils ein Handgriff 6, 7 angeordnet. Die Handgriffe 6, 7 weisen Innenseiten 29 auf, die einander zugewandt angeordnet sind. Die Handgriffe 6, 7 weisen einander abgewandt liegende Außenseiten 28 auf. Die Außenseiten 28 der Handgriffe 6, 7 liegen am Handteller 52 des Benutzers 51 an. Die Innenseiten 29 sind damit die einander nahe liegenden Seiten der Handgriffe 6, 7. Die Außenseiten 28 sind die einander entfernt liegenden Seiten der Handgriffe 6, 7. Die Handgriffe 6, 7 weisen Vorderseiten 39 auf. Die Vorderseite 39 eines jeden Handgriffes 6, 7 ist die im bestimmungsgemäßen Betrieb des Arbeitsgerätes 1 dem Bediener 51 abgewandte Seite des Handgriffes 6, 7. Die Innenseite 29 und die Außenseite 28 des Handgriffes 6, 7 sind über die Vorderseite 39 des Handgriffes 6, 7 verbunden. Die Handgriffe 6, 7 weisen Rückseiten 40 auf. Die Rückseite 40 eines jeden Handgriffes 6, 7 ist die im bestimmungsgemäßen Betrieb des Arbeitsgerätes 1 dem Bediener 51 zugewandte Seite des Handgriffes 6, 7. Die Innenseite 29 und die Außenseite 28 des Handgriffes 6, 7 sind über die Rückseite 40 des Handgriffes 6, 7 verbunden. Im bestimmungsgemäßen Betrieb des Arbeitsgerätes 1 wird dieses vom Bediener 51 bedient, wobei das Werkzeug 70 in Bewegung und im Eingriff mit dem Bearbeitungsgut ist.

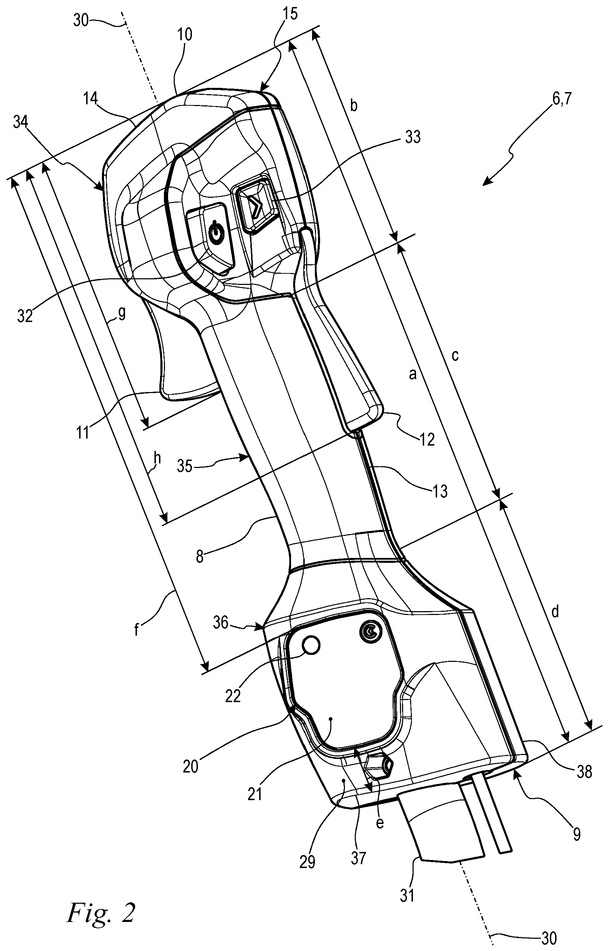

In Fig. 2 ist der Handgriff 6, 7 gezeigt. Der Handgriff 6, 7 weist einen Schaft 8 auf. Der Schaft 8 weist ein Befestigungsende 9 und ein freies Ende 10 auf. Der Schaft 8 erstreckt sich von dem Befestigungsende 9 bis zum freien Ende 10, insbesondere entlang einer Längsmittelachse 30. Der Schaft 8 weist eine Schaftlänge a auf, die dem Abstand zwischen dem freien Ende 10 und dem Befestigungsende 9 entspricht. Der Schaftlänge a ist insbesondere entlang der Längsmittelachse 30 gemessen. An dem Befestigungsende 9 ist der Schaft 8 festgelegt. Der Handgriff 6, 7 umfasst insbesondere einen ersten Halteabschnitt 13, an dem der Bediener 51 den Haltegriff 6, 7 fassen kann. Der erste Halteabschnitt 13 ist an dem Schaft 8 zwischen dem Befestigungsende 9 des Handgriffes 6, 7 und dem freien Ende 10 des Handgriffes 6, 7 angeordnet. Der erste Halteabschnitt 13 des Handgriffes 6, 7 ist derart ausgebildet, dass der Handgriff 6, 7 an dem ersten Halteabschnitt 13 umgriffen werden kann.

Wie in Fig. 2 gezeigt, umfasst der Handgriff 6, 7 mindestens ein erstes Bedienelement 11. Das erste Bedienelement 11 ist insbesondere zur Steuerung des Arbeitsgerätes 1 ausgebildet. Im vorliegenden Ausführungsbeispiel ist das erste Bedienelement 11 zur Ansteuerung des Antriebsmotors 26, insbesondere zur Steuerung der Drehzahl des Antriebsmotors 26, ausgebildet. Das erste Bedienelement 11 ist benachbart zum freien Ende 10 angeordnet. Das erste Bedienelement 11 erstreckt sich bis in den ersten Halteabschnitt 13 des Handgriffes 6, 7. Das erste Bedienelement 11 ist derart am Handgriff 6, 7 angeordnet, dass der Bediener 51 das erste Bedienelement 11 mit der Hand betätigen kann, welche den Handgriff 6, 7 am ersten Halteabschnitt 13 greift. Das erste Bedienelement 11 ist insbesondere als Schwenkhebel ausgebildet.

Wie in Fig. 2 gezeigt, umfasst der Handgriff 6, 7 insbesondere ein zweites Bedienelement 12. Das zweite Bedienelement 12 ist insbesondere als Sperrelement, insbesondere als Sperrhebel, ausgebildet. Das zweite Bedienelement 12 gibt als Sperrelement die Betätigung des ersten Bedienelementes 11 in einer betätigten Stellung frei. Das zweite Bedienelement 12 sperrt als Sperrelement die Betätigung des ersten Bedienelementes 11 in einer unbetätigten Stellung. Im vorliegenden Ausführungsbeispiel ist es vorgesehen, dass der Bediener 51 das erste Bedienelement 11 erst dann betätigen kann, wenn dieser zuvor das zweite Bedienelement 12 betätigt hat. Die Sperrung respektive Freigabe des ersten Bedienelementes 11 durch das zweite Bedienelement 12 erfolgt insbesondere mechanisch und/oder elektronisch. Das zweite Bedienelement 12 ist insbesondere benachbart zum freien Ende 10 des Schaftes 8 an dem Handgriff 6, 7 angeordnet. Das zweite Bedienelement 12 erstreckt sich bis in den ersten Halteabschnitt 13 des Schaftes 8. Der Bediener 51 kann das zweite Bedienelement 12 mit der Hand betätigen, mit der dieser den ersten Halteabschnitt 13 des Schaftes 8 umgreift.

Wie in Fig. 2 gezeigt, umfasst der Handgriff 6, 7 insbesondere ein drittes Bedienelement 32. Ferner umfasst der Handgriff 6, 7 ein viertes Bedienelement 33. Das dritte Bedienelement 32 ist benachbart zum freiende Ende 10 des Handgriffes 6, 7 angeordnet. Das dritte Bedienelement 32 dient insbesondere zum Ein- und Ausschalten des Arbeitsgerätes 1. Das dritte Bedienelement 32 ist als Ein- und Ausschalter des Arbeitsgerätes 1 ausgebildet. Ist das Arbeitsgerät 1 durch das dritte Bedienelement 32 eingeschaltet, ist das Arbeitsgerät 1 betriebsbereit. Der Bediener 51 kann dann durch Betätigung des zweiten Bedienelementes 12 und des ersten Bedienelementes 11 den Antriebsmotor 26 ansteuern. Das vierte Bedienelement 33 ist benachbart zum freien Ende 10 des Handgriffes 6, 7 angeordnet. Mittels des vierten Bedienelementes 33 kann eine Funktion des Arbeitsgerätes 1 geschaltet werden.

Wie in Fig. 2 gezeigt, umfasst der Handgriff 6, 7 einen zweiten Halteabschnitt 14. Der zweite Halteabschnitt 14 ist an dem freien Ende 10 des Handgriffes 6, 7, insbesondere des Schaftes 8, ausgebildet. Der zweite Halteabschnitt 14 ist als eine Auflagefläche 15 zur Auflage des Handballens des Bedieners 51 auf dem Handgriff 6, 7 ausgebildet. Die Auflagefläche 15 ist derart gestaltet, dass der Bediener 51 den Handgriff 6, 7 stirnseitig am freien Ende 10 umgreifen kann. Im Bereich des zweiten Halteabschnittes 14 sind keine Bedienelemente vorgesehen, damit der Bediener 51 bei der Auflage seiner Hand auf dem zweiten Halteabschnitt 14 nicht versehentlich Bedienelemente drückt. Mit der Auflage der Hand auf dem zweiten Halteabschnitt 14 des Handgriffes 6, 7 kann der Bediener die erforderliche Kraft ausüben, um das Arbeitsgerät 1 in Bewegungsrichtung beim Häckselbetrieb mit dem Doppelpfeil H zu bewegen.

Wie in Fig. 2 gezeigt, ist der Schaft 8 des Handgriffes 6, 7 im vorliegenden Ausführungsbeispiel über sein Befestigungsende 9 an einem weiteren Schaft 31 festgelegt. Der Schaft 8 des Handgriffes 6, 7 nimmt den weiteren Schaft 31 zumindest teilweise in sich auf. Der weitere Schaft 31 ist insbesondere als Rohr ausgebildet. Der weitere Schaft 31 ist insbesondere abschnittsweise Teil des Handgriffes 6, 7 und insbesondere zugleich abschnittsweise Teil des Lenkergriffes 5, insbesondere Teil des Lenkerholms 43. In einer alternativen Ausführung kann es auch vorgesehen sein, dass der Handgriff 6, 7 über sein Befestigungsende 9 an einem Grundkörper des Arbeitsgerätes 1, insbesondere am Gehäuse des Arbeitsgerätes 1, festgelegt ist.

Wie in Fig. 2 gezeigt, umfasst der Handgriff 6, 7 eine Anzeigevorrichtung 20. Die Anzeigevorrichtung 20 umfasst im Ausführungsbeispiel ein Anzeigeelement 21. Über das Anzeigeelement 21 können Systeminformationen des Arbeitsgerätes 1 an den Bediener 51 übermittelt werden. Das Anzeigeelement 21 ist vorliegend als Display ausgebildet. Die Anzeigevorrichtung 20 ist derart angeordnet, dass ein Abstand e zwischen der Anzeigevorrichtung 20 und dem Befestigungsende 9 geringer ist als die halbe Schaftlänge a. Die Anzeigevorrichtung 20 kann insbesondere an dem Schaft 8 oder an dem weiteren Schaft 30 angeordnet sein. Die Anzeigevorrichtung 20 ist insbesondere benachbart zu dem Befestigungsende 9 angeordnet. Bevorzugt ist die Anzeigevorrichtung 20 derart an dem Schaft 8 angeordnet, dass der Abstand e zwischen der Anzeigevorrichtung 20 und dem Befestigungsende 9 geringer ist als ein Abstand f zwischen der Anzeigevorrichtung 20 und dem freien Ende 10. Die beiden Abstände e, f sind insbesondere in Richtung der Längsmittelachse 30 des Handgriffes 6, 7 gemessen. Ferner weist das erste Bedienelement 11 einen maximalen Abstand g zum freien Ende 10 auf. Das zweite Bedienelement 12 weist einen maximalen Abstand h zum freien Ende 10 auf. Die maximalen Abstände g, h sind insbesondere in Richtung der Längsmittelachse 30 gemessen. Ein "Abstand" ist die räumliche Entfernung zweier Punkte. Der Abstand zweier Gegenstände bedeutet, dass die Punkte auf den Gegenständen gewählt werden, in welchen die Gegenstände den geringsten Abstand zueinander haben. Der maximale Abstand zweier Gegenstände bedeutet, dass diejenigen Punkte auf den Gegenständen gewählt werden, in welchen die Gegenstände den größten Abstand zueinander aufweisen. Der maximale Abstand g zwischen dem freien Ende 10 und dem ersten Bedienelement 11 ist geringer als der Abstand h zwischen dem freien Ende 10 und dem zweiten Bedienelement 12. Der Abstand f ist größer als der maximale Abstand g und größer als der maximale Abstand h. Der Abstand f zwischen dem freien Ende 10 und der Anzeigevorrichtung 20 entspricht insbesondere mindestens dem 1,5-fachen, insbesondere mindestens dem 1,8-fachen, insbesondere in etwa dem 2-fachen des maximalen Abstandes g zwischen dem freien Ende 10 und dem ersten Bedienelement 11. Der Abstand f zwischen dem freien Ende 10 und der Anzeigevorrichtung 20 entspricht insbesondere mindestens dem 1,2-fachen, insbesondere mindestens dem 1,3 fachen, insbesondere in etwa dem 1,4-fachen des maximalen Abstandes h zwischen dem freien Ende 10 und der zweiten Bedienvorrichtung 12.

Wie in Fig. 2 gezeigt, umfasst die Anzeigevorrichtung 20 insbesondere ein zusätzliches Bedienelement 22. Das zusätzliche Bedienelement 22 ist in Fig. 2 als ein Kreis schematisch dargestellt. Über die Betätigung des zusätzlichen Bedienelementes 22 kann eine Benutzereingabe vorgenommen werden. Das zusätzliche Bedienelement 22 ist vorzugsweise im Anzeigeelement 21 angeordnet. Die Anzeigevorrichtung 20 umfasst insbesondere eine nicht näher dargestellte Steuerplatine. Das zusätzliche Bedienelement 22 sowie das Anzeigeelement 21 der Anzeigevorrichtung 20 sind insbesondere mit der Steuerplatine der Anzeigevorrichtung 20, insbesondere unmittelbar, wirkverbunden. In einer alternativen Ausführung des Handgriffes 6, 7 kann es auch vorgesehen sein, dass die Anzeigevorrichtung 20 neben dem zusätzlichen Bedienelement 22 weitere Bedienelemente aufweist.

Es kann auch vorgesehen sein, dass das Display ein berührungsempfindliches Display ist. Ist das Display 21 als ein berührungsempfindliches Display ausgebildet, so können über dieses vorzugsweise auch Benutzereingaben vorgenommen werden. In einer solchen Ausführung ist das berührungsempfindliche Display das Anzeigeelement 21 als auch das zusätzliche Bedienelement 22.

Wie in Fig. 2 gezeigt, ist die Anzeigevorrichtung 20 insbesondere benachbart, insbesondere unmittelbar benachbart, zum Befestigungsende 9 an dem Handgriff 6, 7 angeordnet. Die Anzeigevorrichtung 20 ist insbesondere außerhalb des ersten Halteabschnittes 13 und/oder außerhalb des zweiten Halteabschnittes 14 angeordnet. Somit liegt im bestimmungsgemäßen Betrieb des Arbeitsgerät 1 keine Hand des Bedieners auf der Anzeigevorrichtung 20, wodurch auch die Sicht auf das Anzeigeelement 21 der Anzeigevorrichtung 20 für den Bediener unversperrt bleibt. Die Anzeigevorrichtung 20 ist insbesondere zwischen dem Befestigungsende 9 des Handgriffes 6, 7 und dem ersten Halteabschnitt 13 des Handgriffes 6, 7 angeordnet. Besonders bevorzugt ist die Anzeigevorrichtung 20 auf der Innenseite 29 des Handgriffes 6, 7, auf der Rückseite 40 des Handgriffes 6, 7 oder in einem Bereich des Handgriffes 6, 7 zwischen der Innenseite 29 und der Rückseite 40 des Handgriffes 6, 7 angeordnet. Ist die Anzeigevorrichtung 20 in einem Bereich des Handgriffes 6, 7 zwischen der Innenseite 29 und der Rückseite 40 des Handgriffes 6, 7 angeordnet, so ist die Anzeigevorrichtung 20 zum Bediener 51 hin ausgerichtet. Somit ist die Anzeigevorrichtung 20, insbesondere das Anzeigeelement 21, besonders sichtbar für den Bediener 51 ausgerichtet.

Wie in Fig. 2 gezeigt, ist der Handgriff 6, 7 hantelartig ausgebildet. Der Handgriff 6, 7 lässt sich vorliegend in drei Abschnitte unterteilen, nämlich in einen Kopfabschnitt 34, einen Mittelabschnitt 35 und in einen Fußabschnitt 36. Das freie Ende 10 des Handgriffes 6, 7 ist an dem Kopfabschnitt 34 des Handgriffes 6, 7 ausgebildet. An dem Kopfabschnitt 35 sind insbesondere das dritte Bedienelement 32 und/oder das vierte Bedienelement 33 angeordnet. An den Kopfabschnitt 34 schließt der Mittelabschnitt 35 an. Der Mittelabschnitt 35 entspricht dem ersten Halteabschnitt 13. An den Mittelabschnitt 35 schließt dann der Fußabschnitt 36 des Handgriffes 6, 7 an. Das Befestigungsende 9 des Handgriffes 6, 7 ist an dem Fußabschnitt 36 ausgebildet. An dem Fußabschnitt 36 ist insbesondere die Anzeigevorrichtung 20 angeordnet.

Wie in Fig. 2 gezeigt, sind insbesondere der Kopfabschnitt 34 und/oder der Fußabschnitt 36 gegenüber dem Mittelabschnitt 35 verdickt ausgebildet. Die Verdickung bezieht sich auf eine Erstreckung von Kopfabschnitt 34 und/oder Fußabschnitt 36 radial zur Längsmittelachse 30 des Handgriffes 6, 7. Der Kopfabschnitt 34 und/oder der Fußabschnitt 36 bilden somit einen Anschlag in Richtung der Längsmittelachse 30 des Handgriffes 6, 7 ausgehend von dem Mittelabschnitt 35 für die den Mittelabschnitt 35 greifende Hand des Bedieners 51.

Wie in Fig. 2 gezeigt, erstreckt sich der Schaft 8 des Handgriffes 6, 7 in Richtung seiner Längsmittelachse 30 von seinem freien Ende 10 bis zu seinem Befestigungsende 9 über die Schaftlänge a. Der Kopfabschnitt 34 erstreckt sich entlang der Längsmittelachse 30 von dem freien Ende 10 bis zum Mittelabschnitt 35 über eine Länge b. Der Mittelabschnitt 35 erstreckt sich entlang der Längsmittelachse 30 von dem Kopfabschnitt 34 bis zum Fußabschnitt 36 über eine Länge c. Der Fußabschnitt 36 erstreckt sich entlang der Längsmittelachse 30 von dem Mittelabschnitt 35 bis zum Befestigungsende 9 über eine Länge d. Die Länge b des Kopfabschnittes 34 beträgt mindestens 15%, vorzugsweise mindestens 25% der Schaftlänge a des Schaftes 8 des Handgriffes 6, 7. Die Länge d des Fußabschnittes 36 beträgt mindestens 15%, vorzugsweise mindestens 25% der Schaftlänge a des Schaftes 8 des Handgriffes 6, 7. Die Länge d des Fußabschnittes 36 beträgt höchstens 40%, insbesondere höchstens 35% der Schaftlänge a des Schaftes 8 des Handgriffes 6, 7. Die Länge c des Mittelabschnittes 35 beträgt mindestens 20%, insbesondere mindestens 30% der Schaftlänge a des Schaftes 8 des Handgriffes 6, 7.

Wie in Fig. 2 gezeigt, umfasst der Handgriff 6, 7 eine erste Gehäuseschale 37 und eine zweite Gehäuseschalte 38. Die beiden Gehäuseschalen 37, 38 sind vorzugsweise miteinander verschraubt. In den beiden Gehäuseschalen 37, 38 ist der weitere Schaft 31 aufgenommen. Über die Gehäuseschalen 37, 38 ist der Handgriff 6, 7 geklemmt auf dem weiteren Schaft 31 gehalten. Die erste Gehäuseschale 37 bildet die Innenseite 29 des Handgriffes 6, 7. Die zweite Gehäuseschalte 38 bildet die Außenseite 28 des Handgriffes 6, 7.

## Patentansprüche

1. Handgriff für ein handgeführtes Arbeitsgerät,
wobei der Handgriff (6, 7) einen Schaft (8) aufweist, der ein Befestigungsende (9) und ein freies Ende (10) aufweist und sich von dem Befestigungsende (9) bis zu dem freien Ende (10) über eine Schaftlänge (a) erstreckt wobei der Schaft (8) des Handgriffes (6, 7) an dem Befestigungsende (9) festgelegt ist,
wobei der Handgriff (6, 7) ein erstes Bedienelement (11) zur Steuerung des Arbeitsgerätes (1) aufweist, wobei das erste Bedienelement benachbart zum freien Ende (10) des Schaftes (8) angeordnet ist,
**dadurch gekennzeichnet, dass** der Handgriff (6, 7) eine Anzeigevorrichtung (20) mit einem Anzeigeelement (21) zur Übermittlung von Betriebsinformationen an den Bediener (51) aufweist, wobei die Anzeigevorrichtung (20) derart angeordnet ist, dass ein Abstand (e) zwischen der Anzeigevorrichtung (20) und dem Befestigungsende (9) geringer ist als die halbe Schaftlänge (a).

2. Handgriff nach Anspruch 1,
**dadurch gekennzeichnet, dass** das Anzeigeelement (21) ein Display, insbesondere ein berührungsempfindliches Display ist.

3. Handgriff nach Anspruch 1 oder 2,
**dadurch gekennzeichnet, dass** die Anzeigevorrichtung (20) ein zusätzliches Bedienelement (22) zur Benutzereingabe umfasst.

4. Handgriff nach Anspruch 3,
**dadurch gekennzeichnet, dass** das zusätzliche Bedienelement (22) in dem Display (21) angeordnet ist.

5. Handgriff nach einem der Ansprüche 1 bis 4,
**dadurch gekennzeichnet, dass** das Anzeigeelement (20) an dem Schaft (8) des Handgriffes (6, 7) angeordnet ist.

6. Handgriff nach einem der Ansprüche 1 bis 5,
**dadurch gekennzeichnet, dass** der Handgriff (6, 7) eine Außenseite (28) aufweist, die mindestens teilweise zur Anlage an einem Handteller (52) eines Benutzers (51) vorgesehen ist, wobei der Handgriff (6, 7) eine der Außenseite (28) gegenüberliegende Innenseite (29) aufweist, wobei die Anzeigevorrichtung (20) auf der Innenseite (29) des Handgriffes (6, 7) angeordnet ist.

7. Handgriff nach einem der Ansprüche 1 bis 6,
**dadurch gekennzeichnet, dass** der Handgriff (6, 7) einen ersten Halteabschnitt (13) umfasst, wobei der erste Halteabschnitt (13) zwischen dem Befestigungsende (9) und dem freien Ende (10) des Handgriffes (6, 7) ausgebildet ist.

8. Handgriff nach einem der Ansprüche 1 bis 7,
**dadurch gekennzeichnet, dass** der Handgriff (6, 7) einen zweiten Halteabschnitt (14) umfasst, wobei der zweite Halteabschnitt (14) an dem freien Ende (10) des Handgriffes (6, 7) als Auflagefläche (15) zur Auflage einer Hand des Bedieners (51) ausgebildet.

9. Handgriff nach Anspruch 7 und 8,
**dadurch gekennzeichnet, dass** die Anzeigevorrichtung (20) außerhalb des ersten Halteabschnittes (13) und außerhalb des zweiten Halteabschnittes (14) angeordnet ist.

10. Handgriff nach einem der Ansprüche 7 bis 9,
**dadurch gekennzeichnet, dass** die Anzeigevorrichtung (20) zwischen dem ersten Halteabschnitt (13) und dem Befestigungsende (9) angeordnet ist.

11. Arbeitsgerät,
umfassend
ein Gehäuse (4) und einen darin angeordneten Antriebsmotor (26), wobei über den Antriebsmotor (26) ein Werkzeug antreibbar ist,
einen Handgriff (6, 7) mit einem Schaft (8), der ein Befestigungsende (9) und ein freies Ende (10) aufweist und sich von dem Befestigungsende (9) bis zu dem freien Ende (10) über eine Schaftlänge (a) erstreckt, wobei der Schaft (8) des Handgriffes (6, 7) an dem Befestigungsende (9) festgelegt ist, wobei der Handgriff (6, 7) ein erstes Bedienelement (11) zur Steuerung des Arbeitsgerätes (1), insbesondere des Antriebsmotors (26) des Arbeitsgerätes (1), aufweist, wobei das erste Bedienelement benachbart zum freien Ende (10) des Schaftes (8) angeordnet ist,
**dadurch gekennzeichnet, dass** der Handgriff (6, 7) eine Anzeigevorrichtung (20) mit einem Anzeigeelement (21) zur Übermittlung von Betriebsinformationen an den Bediener (51) aufweist, wobei die Anzeigevorrichtung (20) derart angeordnet ist, dass ein Abstand (e) zwischen der Anzeigevorrichtung (20) und dem Befestigungsende (9) geringer ist als die halbe Schaftlänge (a).

## Geänderte Patentansprüche

### Geänderte Patentansprüche gemäss Regel 137(2) EPÜ.

1. Handgriff für ein handgeführtes Arbeitsgerät,
wobei der Handgriff (6, 7) einen Schaft (8) aufweist, der ein Befestigungsende (9) und ein freies Ende (10) aufweist und sich von dem Befestigungsende (9) bis zu dem freien Ende (10) über eine Schaftlänge (a) erstreckt wobei der Schaft (8) des Handgriffes (6, 7) an dem Befestigungsende (9) festgelegt ist,
wobei der Handgriff (6, 7) ein erstes Bedienelement (11) zur Steuerung des Arbeitsgerätes (1) aufweist, wobei das erste Bedienelement benachbart zum freien Ende (10) des Schaftes (8) angeordnet ist,
wobei der Handgriff (6, 7) eine Anzeigevorrichtung (20) mit einem Anzeigeelement (21) zur Übermittlung von Betriebsinformationen an den Bediener (51) aufweist, wobei die Anzeigevorrichtung (20) derart angeordnet ist, dass ein Abstand (e) zwischen der Anzeigevorrichtung (20) und dem Befestigungsende (9) geringer ist als die halbe Schaftlänge (a),
**dadurch gekennzeichnet, dass** der Handgriff (6, 7) eine Außenseite (28) aufweist, die mindestens teilweise zur Anlage an einem Handteller (52) eines Benutzers (51) vorgesehen ist, wobei der Handgriff (6, 7) eine der Außenseite (28) gegenüberliegende Innenseite (29) aufweist, wobei der Handgriff (6,7) eine Rückseite (40) aufweist, wobei die Rückseite (40) des Handgriffes (6, 7) eine im bestimmungsgemäßen Betrieb des Arbeitsgerätes (1) dem Bediener (51) zugewandte Seite des Handgriffes (6, 7) ist,
wobei die Anzeigevorrichtung (20) auf der Innenseite (29) des Handgriffes (6, 7), auf der Rückseite (40) des Handgriffes (6, 7) oder in einem Bereich des Handgriffes (6, 7) zwischen der Innenseite (29) und der Rückseite (40) des Handgriffes (6,7) angeordnet ist.

2. Handgriff nach Anspruch 1,
**dadurch gekennzeichnet, dass** das Anzeigeelement (21) ein Display, insbesondere ein berührungsempfindliches Display ist.

3. Handgriff nach Anspruch 1 oder 2,
**dadurch gekennzeichnet, dass** die Anzeigevorrichtung (20) ein zusätzliches Bedienelement (22) zur Benutzereingabe umfasst.

4. Handgriff nach Anspruch 3,
**dadurch gekennzeichnet, dass** das zusätzliche Bedienelement (22) in dem Display (21) angeordnet ist.

5. Handgriff nach einem der Ansprüche 1 bis 4,
**dadurch gekennzeichnet, dass** das Anzeigeelement (20) an dem Schaft (8) des Handgriffes (6, 7) angeordnet ist.

6. Handgriff nach einem der Ansprüche 1 bis 5,
**dadurch gekennzeichnet, dass** der Handgriff (6, 7) einen ersten Halteabschnitt (13) umfasst, wobei der erste Halteabschnitt (13) zwischen dem Befestigungsende (9) und dem freien Ende (10) des Handgriffes (6, 7) ausgebildet ist.

7. Handgriff nach Anspruch 6,
**dadurch gekennzeichnet, dass** der Handgriff (6, 7) einen zweiten Halteabschnitt (14) umfasst, wobei der zweite Halteabschnitt (14) an dem freien Ende (10) des Handgriffes (6, 7) als Auflagefläche (15) zur Auflage einer Hand des Bedieners (51) ausgebildet.

8. Handgriff nach Anspruch 6 und 7,
**dadurch gekennzeichnet, dass** die Anzeigevorrichtung (20) außerhalb des ersten Halteabschnittes (13) und außerhalb des zweiten Halteabschnittes (14) angeordnet ist.

9. Handgriff nach einem der Ansprüche 6 bis 8,
**dadurch gekennzeichnet, dass** die Anzeigevorrichtung (20) zwischen dem ersten Halteabschnitt (13) und dem Befestigungsende (9) angeordnet ist.

10. Arbeitsgerät,
umfassend
ein Gehäuse (4) und einen darin angeordneten Antriebsmotor (26), wobei über den Antriebsmotor (26) ein Werkzeug antreibbar ist, und
einen Handgriff (6, 7) nach einem der Ansprüche 1 bis 9.
